# EUROPÄISCHE PATENTSCHRIFT

(11) **EP 2 788 286 B1**
(45) Veröffentlichungstag und Bekanntmachung des Hinweises auf die Patenterteilung: **01.02.2017**
(21) Anmeldenummer: 12795338.8
(22) Anmeldetag: 28.11.2012
(51) Int. Cl.: C01B 25/163, C08K 3/00, C08K 3/32

(54) **ALUMINIUM-HYDROGENPHOSPHITE, EIN VERFAHREN ZU IHRER HERSTELLUNG SOWIE IHRE VERWENDUNG**
ALUMINIUM HYDROGEN PHOSPHITES, A PROCESS FOR PREPARING THEM AND THEIR USE
HYDROGÉNOPHOSPHITES D'ALUMINIUM, PROCÉDÉ DE PRODUCTION DESDITS HYDROGÉNOPHOSPHITES D'ALUMINIUM ET LEUR UTILISATION

(30) Priorität: 05.12.2011 DE 102011120192
(43) Veröffentlichungstag der Anmeldung: 15.10.2014
(73) Patentinhaber: Clariant International Ltd, 4132 Muttenz (CH)
(72) Erfinder: BAUER, Harald, 50170 Kerpen (DE); HÖROLD, Sebastian, 86420 Diedorf (DE); SICKEN, Martin, 51149 Köln (DE)
(74) Vertreter: Mikulecky, Klaus
(86) Internationale Anmeldenummer: PCT/EP2012/004908
(87) Internationale Veröffentlichungsnummer: WO 2013/083250

(56) Entgegenhaltungen:
- EP-A1- 0 896 023
- JP-A- 2 175 604
- MORRIS R E ET AL: "Synthesis and structures of two isostructural phosphites, Al2(HPO3)3 and Ga2(HPO3)3", ACTA CRYSTALLOGRAPHICA SECTION C. CRYSTAL STRUCTURE COMMUNICATIONS, MUNKSGAARD, COPENHAGEN, DK, Bd. 50, Nr. 4, 1. April 1994 (1994-04-01), Seiten 473-476, XP009166285, ISSN: 0108-2701

## Beschreibung

Die vorliegende Erfindung betrifft Aluminium-Hydrogenphosphite, ein Verfahren zu deren Herstellung und deren Verwendung.

Reine Aluminiumphosphite sind bekannt. Es sind mikroporöse Verbindungen ähnlich Zeolithen in denen Aluminiumionen und Phosphitionen ein dreidimensionales Netzwerk von mehrgliedrigen Ringen bilden. Sie können Kristallwasser enthalten oder unter Verlust der Kristallstruktur Kristallwasser abgeben und dann Anhydrate bilden. Nach dem Stand der Technik erfolgt die Kristallisation hydrothermal, d. h. oberhalb des Siedepunktes von Wasser unter dessen Eigendruck. Zur Erleichterung der Kristalliation (Yang. Shiyou Xuebao, Shiyou Jiagong (2006), 22(Suppl.), 79-81) werden Polystickstoffverbindungen als strukturdirigierende Agenzien - auch Template genannt - zugesetzt. Diese verbleiben nachteilig im Produkt und stören bei der späteren Verwendung desselben.

Die vorliegende Erfindung betrifft neuartige Aluminium-Hydrogenphosphite. Diese enthalten protonierte Phosphitionen in erheblichen molaren Anteilen in der Substanz gebunden.

Es wurde überraschend gefunden, dass die erfindungsgemäßen Aluminium-Hydrogenphosphite als Synergisten zu Flammschutzmitteln verwendbar sind. Diese Flammschutzmittelsynergisten müssen selbst nicht flammschutzaktiv sein, können aber die Wirksamkeit von Flammschutzmitteln wesentlich steigern. Üblicherweise werden die Flammschutzmittelsynergisten zusammen mit Flammschutzmitteln und weiteren Polymeradditiven durch Kneten und Extrusion mit dem flammzuschützenden Polymer vermischt. Diese Verarbeitung geschieht bei Temperaturen, bei denen das Polymer geschmolzen vorliegt und die für kurze Zeit 320 °C deutlich überschreiten können. Flammschutzmittelsynergisten müssen diese Temperaturen unzersetzt überstehen können. Überraschend wurde nun gefunden, dass die erfindungsgemäßen Aluminium-Hydrogenphosphite deutlich thermostabiler als reine Aluminiumphosphite sind.

Bekannt sind auch Mischungen von Aluminiumphosphiten mit Aluminiumhydroxid. Nachteilig ist der durch den Aluminiumhydroxidgehalt herabgesetzte aktive Phosphorgehalt. Die erfindungsgemäße Aufgabe eines möglichst hohen aktiven Phosphorgehaltes wird durch die erfindungsgemäßen Aluminium-Hydrogenphosphite gelöst, da der spezifische Gehalt an Phosphor, und damit an Phosphit, in Salzen mit einwertigen Phosphorionen sowie es hier der Fall ist, höher sein muss als in Salzen mit zweiwertigen Phorsphorionen. Außerdem sind Mischungen von Aluminiumphosphiten mit Aluminiumhydroxid weniger thermostabil als die erfindungsgemäßen Aluminium-Hhydrogenphosphite.

Bekannt sind auch Aluminiumphosphithydrate, die allerdings bei Erhitzung Wasser abspalten und daher nur schwierig in ein Polymer einzuarbeiten sind. Die erfindungsgemäße Aufgabe wird durch die erfindungsgemäßen Aluminium-Hydrogenphosphite gelöst, in dem diese weitgehend kristallwasserfrei sind.

Die Erfindung betrifft somit Aluminium-Hydrogenphosphite der Formel (I)

Al_{2,00}(HPO₃)ᵥ(H₂PO₃)_{y} x (H₂O)_{z} (I)

in der

| | |
|---|---|
| v | 2 bis 2,99, |
| y | 2 bis 0,01 und |
| z | 0 bis 4 bedeutet |

Bevorzugt bedeutet

| | |
|---|---|
| v | 2,56 bis 2,99 |
| y | 0,9 bis 0,02 und |
| z | 0 bis 1. |

Besonders bevorzugt bedeutet

| | |
|---|---|
| v | 2,834 bis 2,99, |
| y | 0,332 bis 0,03 und |
| z | 0,01 bis 0,1. |

Bevorzugt weisen die Aluminium-Hydrogenphosphite nach einem oder mehreren der Ansprüche 1 bis 3 eine Teilchengröße von 0,1 bis 1000 µm, eine Löslichkeit in Wasser von 0,01 bis 10 g/l, eine Schüttdichte von 80 bis 800 g/l und eine Restfeuchte von 0,1 bis 5 % auf.

Die vorliegende Aufgabe wird auch gelöst durch ein Verfahren zur Herstellung von Aluminium-Hydrogenphosphiten nach einem oder mehreren der Ansprüche 1 bis 4, dadurch gekennzeichnet, dass man im Verhältnis 2,5 bis 3,5 mol eine Phosphorquelle mit 2 mol einer Aluminiumquelle ohne Verwendung eines Lösungsmittels bei 50 bis 300 °C zur Reaktion bringt.

Bevorzugt wird die Reaktion bei 120 bis 220 °C ausgeführt.

Bevorzugt handelt es sich bei den Aluminiumquellen um Aluminiummetall, Aluminiumlegierungen, Oxide, Hydroxide, Peroxide, Peroxidhydrate, Carbonate, Percarbonate, gemischte Carbonate/Hydrate, Formiate, Acetate, Propionate, Stearate, Lactate, Ascorbate, Oxalate oder um Aluminiumsalze mit Anionen von Säuren, die einen höheren Dampfdruck haben als phosphorige Säure.

Bevorzugt handelt es sich bei den Phosphitquellen um phosphorige Säure, Phosphortrioxid, Phosphortrichlorid, elementarem Phosphor und/oder hypophosphorige Säure.

Die Erfindung betrifft auch die Verwendung von Aluminium-Hydrogenphosphiten nach einem oder mehreren der Ansprüche 1 bis 4 als Zwischenprodukt für weitere Synthesen, als Binder, als Vernetzer bzw. Beschleuniger beim Aushärten von Epoxyharzen, Polyurethanen, ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen und in Elektronikanwendungen.

Die Erfindung betrifft insbesondere die Verwendung von Aluminium-Hydrogenphosphiten nach einem oder mehreren der Ansprüche 1 bis 4 als Flammschutzmittel, insbesondere Flammschutzmittel für Klarlacke und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung sowie als Synergist und als Synergist in Flammschutzmittel-Mischungen und Flammschutzmitteln.

Die Erfindung umfasst auch flammgeschützte thermoplastische oder duroplastische Polymerformmassen, Polymer-Formkörper, -Filme, -Fäden und -Fasern enthaltend 0,1 bis 45 Gew.-% Aluminium-Hydrogenphosphite nach einem oder mehreren der Ansprüche 1 bis 4, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Die Erfindung betrifft auch flammgeschützte thermoplastische oder duroplastische Polymerformmassen, Polymer-Formkörper, -Filme, -Fäden und -Fasern enthaltend 0,1 bis 45 Gew.-% einer Flammschutzmittel-Mischung, welche 0,1 bis 50 Gew.-% Aluminium-Hydrogenphosphite nach einem oder mehreren der Ansprüche 1 bis 4 und 50 bis 99,9 Gew.-% Flammschutzmittel enthält, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

Bevorzugt handelt es sich bei dem Flammschutzmittel um Dialkylphosphinsäuren und/oder deren Salze; um Kondensationsprodukte des Melamins und/oder Umsetzungsprodukte des Melamins mit Phosphorsäure und/oder um Umsetzungsprodukte von Kondensationsprodukten des Melamins mit Polyphosphorsäure oder Gemischen davon; um stickstoffhaltige Phosphate der Formeln (NH₄)_{y} H₃-_{y} PO₄ bzw. (NH₄ PO₃)_{z}, mit y gleich 1 bis 3 und z gleich 1 bis 10.000; um Benzoguanamin, Tris(hydroxyethyl)isocyanurat, Allantoin, Glycouril, Melamin, Melamincyanurat, Dicyandiamid und/oder Guanidin; um Magnesiumoxid, Calciumoxid, Aluminiumoxid, Zinkoxid, Manganoxid, Zinnoxid, Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zink-Silikat und/oder Zinkstannat.

Besonders bevorzugt handelt es sich bei dem Flammschutzmittel um Melam, Melem, Melon, Dimelaminpyrophosphat, Melaminpolyphosphat, Melampolyphosphat, Melonpolyphosphat und/oder Melempolyphosphat und/oder gemischte Polysalze davon und/oder um Ammoniumhydrogenphosphat, Ammoniumdihydrogenphosphat und/oder Ammoniumpolyphosphat.

Bevorzugte Flammschutzmittel sind auch Aluminumhypophosphit, Zinkhypophosphit, Calciumhypophosphit, Natriumphosphit, Monophenylphopshinsäure und deren Salze, Mischungen von Dialkylphosphinsäuren und deren Salze mit Monoalkylphosphinsäuren und deren Salze, 2-Carboxyethyl-alkylphosphinsäure und deren Salze, 2-Carboxyethylmethylphosphinsäure und deren Salze, 2-Carboxyethyl-arylphosphinsäure und deren Salze, 2-Carboxyethylphenyl-phosphinsäure und deren Salze, Oxa-10-phosphaphenanthrene (DOPO) und dessen Salze und Addukte an para-Benzochinon bzw. Itaconsäure und deren Salze.

Bevorzugte Alkaliquellen sind Alkalisalze.

Bevorzugt weisen die erfindungsgemäßen Aluminium-Hydrogenphosphite eine Schüttdichte von 200 bis 700 g/l auf.

Bevorzugt weist die erfindungsgemäßen Aluminium-Hydrogenphosphite einen L-Farbwert von 85 bis 99,9, besonders bevorzugt von 90 bis 98 auf.

Bevorzugt weist die erfindungsgemäßen Aluminium-Hydrogenphosphite einen a-Farbwert von -4 bis +9, besonders bevorzugt von -2 bis +6, auf.

Bevorzugt weist die erfindungsgemäßen Aluminium-Hydrogenphosphite einen b-Farbwert von -2 bis +6, besonders bevorzugt von -1 bis +3, auf.

Die Farbwerte werden im System nach Hunter (CIE-LAB-System, Commission Internationale d'Eclairage) angegeben. L-Werte gehen von 0 (schwarz) bis 100 (weiß), a-Werte von -a (grün) bis +a (rot) und b-Werte von -b (blau) bis +b (gelb).

Bevorzugte Phosphitquellen sind phosphorige Säure oder deren Vorstufen. Vorstufen sind Substanzen, die unter den Bedingungen des Verfahrens Phosphitionen bilden können, z. B. Phosphortrioxid (P₂O₆), das unter Hydrolyse phosphorige Säure bilden kann, Phosphortrichlorid und elementares Phosphor oder hypophosphorige Säure, die durch Oxidation in phosphorige Säure umgewandelt werden können.

Der vorliegenden Erfindung liegt die Aufgabe zugrunde, templatfreie Aluminium-Hydrogenphosphite zur Verfügung zu stellen. Weiterhin bestand die Aufgabe, ein Verfahren zur Verfügung zu stellen, das ohne die Template und wässrige Suspension auskommt.

Bevorzugte Reaktionsbedingungen sind Temperaturen von 0 bis 300 °C, besonders bevorzugt von 50 bis 170 °C und Reaktionszeiten von 10⁻⁷ bis 10² h. Der Druck kann sich zwischen 1 bis 200 MPa (=0,00001 bis 200 bar), bevorzugt zwischen 10 Pa bis 10 MPa bewegen.

Bevorzugt ist ein Energieeintrag von 0,083 bis 10 kW/m³, besonders bevorzugt 0,33 bis 1,65 kW/m³.

Bevorzugte Reaktionsführung ist die Aluminiumquelle vorzulegen und die Phosphitquelle zuzudosieren. Alternativ bevorzugte Reaktionsführung ist Aluminiumquelle und Phosphitquelle gleichzeitig zuzudosieren.

Die Reaktionsmasse kann erstarren. Bevorzugt ist daher eine mehrstufige Vorgehensweise: Vorreaktion in einem Reaktor (z. B. Kneter, Mischer, Drehrohr) zu einer festen Masse, Mahlung (z. B. Mühle, Kneter, Drehrohr mit Mahleinbauten), Nachtempern in einem Reaktor (z. B. Kneter, Mischer, Drehrohr).

Alternativ ist die ganze Reaktion in einem beheizten Mahlapparat durchführbar.

Bevorzugt ist, die Phosphitquelle und Aluminiumquelle zu einem vorgelegten Anteil abreagierter Reaktionsmischung zuzudosieren.

Das Verhältnis von abreagierter Reaktionsmischung zu Neuware ist 1:100 bis 80:20, bevorzugt 30:70 bis 70:30.

Bevorzugt ist die Verwendung der erfindungsgemäßen Aluminium-Hydrogenphosphite als Flammschutzmittelsynergist.

Bevorzugt sind auch Zusammensetzungen, enthaltend 5 bis 99,8 Gew.-% Aluminium-Hydrogenphosphite der Formel (I) 0,1 bis 94,9 Gew.-% Dialkylphosphinsäuren oder deren Salze 0,1 bis 30 Gew.-% eines oder mehrere Polymeradditive.

Bevorzugte Dialkylphosphinsäuren und/oder deren Salze sind solche der Formel (II) 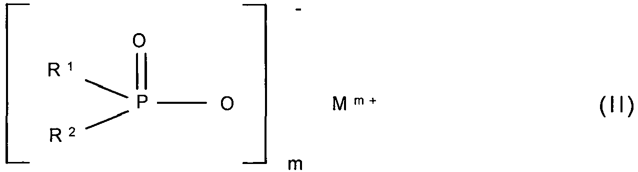 worin
- R¹, R²: gleich oder verschieden sind und C₁-C₆-Alkyl, linear oder verzweigt;
- M: Mg, Ca, Al, Sb, Sn, Ge, Ti, Fe, Zr, Zn, Ce, Bi, Sr, Mn, Li, Na, K, H und/oder eine protonierte Stickstoffbase ;
- m: 1 bis 4 bedeuten.

Bevorzugte Dialkylphosphinsäure-Salze sind Aluminiumtrisdiethylphosphinat, Aluminiumtrismethylethylphosphinat, Titanylbisdiethylphosphinat, Titantetrakisdiethylphosphinat, Titanylbismethylethylphosphinat, Titantetrakismethylethylphosphinat, Zinkbisdiethylphosphinat, Zinkbismethylethylphosphinat und Mischungen davon.

Geeignet als weitere Flammschutzmittel sind auch bestimmte stickstoffhaltige Verbindungen (DE-A-196 14 424, DE-A-197 34 437 und DE-A-197 37 727). Besonders geeignete entsprechen den Formeln (III) bis (VIII) oder Gemischen davon 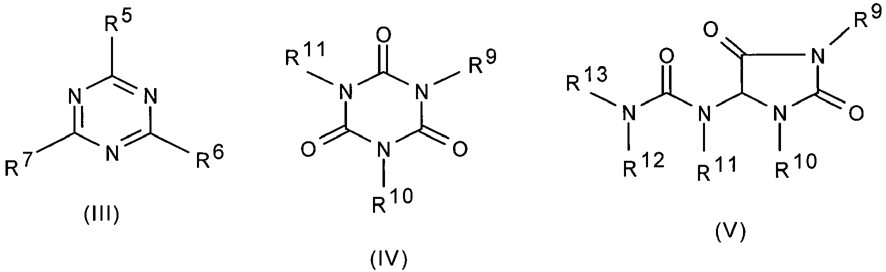 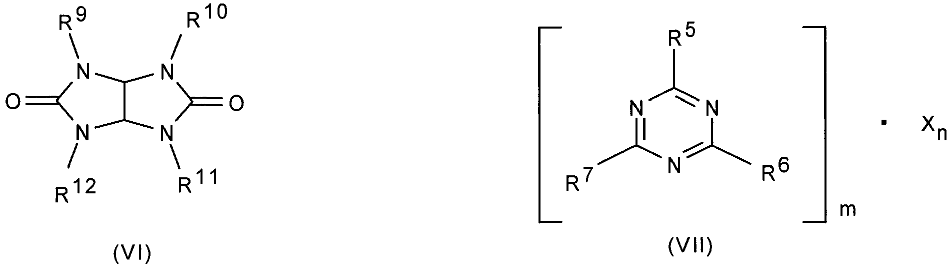 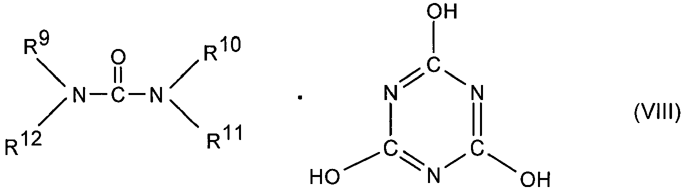 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können,
bedeuten; oder oligomere Ester des Tris(hydroxyethyl)isocyanurats mit aromatischen Polycarbonsäuren.

Besonders geeignete sind dabei sind Benzoguanamin, Tris(hydroxyethyl)isocyanurat, Allantoin, Glycouril, Melamin, Melamincyanurat, Dicyandiamid und/oder Guanidin.

Geeignete Polymer-Additive für flammgeschützte Polymerformmassen und Polymerformkörper sind UV-Absorber, Lichtschutzmittel, Gleitmittel, Farbmittel, Antistatika, Nukleierungsmittel, Füllstoffe, Synergisten, Verstärkungsmittel und andere.

Bevorzugt ist die Anwendung der erfindungsgemäßen flammgeschützten Polymer-Formkörper als Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren.

Bevorzugt enthält die Intumeszenz-Flammschutz-Beschichtung 1 bis 50 Gew.-% der erfindungsgemäßen Aluminium-Hydrogenphosphite der Formel (I), sowie 50 bis 99 Gew.-% Ammoniumpolyphosphat, Bindemittel, Schaumbildner, Dialkylphosphinsäuresalze, Füllstoffe und Polymeradditive.

Bevorzugt entstammen die Polymere aus der Gruppe der thermoplastischen Polymere wie Polyester, Polystyrol oder Polyamid und/oder der duroplastischen Polymere.

Bevorzugt handelt es sich bei den Polymeren um Polymere von Mono- und Diolefinen, beispielsweise Polypropylen, Polyisobutylen, Polybuten-1, Poly-4-Methyl-penten-1, Polyisopren oder Polybutadien sowie Polymerisate von Cycloolefinen wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z. B. Polyamiden.

Bevorzugt handelt es sich bei den Polymeren um Kohlenwasserstoffharze (z. B. C₅-C₉) inklusive hydrierte Modifikationen davon (z. B. Klebrigmacherharze) und Mischungen von Polyalkylenen und Stärke.

Bevorzugt handelt es sich bei den Polymeren um Polystyrol (Polystyrol^{®} 143E (BASF), Poly-(p-Methylstyrol), Poly-(alpha-Methylstyrol).

Bevorzugt handelt es sich bei den Polymeren um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und

-methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als sogenannte ABS-, MBS-, ASA- oder AES-Polymere bekannt sind.

Bevorzugt handelt es sich bei den Styrol-Polymeren um eher grobporigen Schaum wie EPS (expandiertes Polystyrol), z. B. Styropor (BASF) und/oder feinporigeren wie XPS (Extrudierter Polystyrol-Hartschaum), z. B. Styrodur^{®} (BASF). Bevorzugt sind Polystyrolschaumstoffe wie z. B. Austrotherm^{®} XPS, Styrofoam^{®} (Dow Chemical), Floormate^{®}, Jackodur^{®}, Lustron^{®}, Roofmate^{®}, Styropor^{®}, Styrodur^{®}, Styrofoam^{®}, Sagex^{®} und Telgopor^{®}.

Bevorzugt handelt es sich bei den Polymeren um Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte PolyMethylmethacrylate, Polyacrylamide und Polyacrylnitrile und Copolymere der genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon^{®} 4, Fa. DuPont), Polyamid 4/6 (Poly(tetramethylen-adipamid), Poly-(tetramethylen-adipinsäurediamid), Nylon^{®} 4/6, Fa. DuPont), Polyamid 6 (Polycaprolactam, Poly-6-aminohexansäure, Nylon^{®} 6, Fa. DuPont, Akulon^{®} K122, Fa. DSM; Zytel^{®} 7301, Fa. DuPont; Durethan^{®} B 29, Fa. Bayer), Polyamid 6/6 ((Poly(N,N'-hexamethyleneadipinediamid), Nylon^{®} 6/6 , Fa. DuPont , Zytel^{®} 101, Fa. DuPont; Durethan^{®} A30, Durethan^{®} AKV, Durethan^{®} AM, Fa. Bayer; Ultramid^{®} A3, Fa BASF), Polyamid 6/9 (Poly(hexamethylen nonanediamid), Nylon^{®} 6/9 , Fa. DuPont), Polyamid 6/10 (Poly(hexamethylen sebacamid), Nylon^{®} 6/10, Fa. DuPont), Polyamid 6/12 (Poly(hexamethylendodecanediamid), Nylon^{®} 6/12, Fa. DuPont), Polyamid 6/66 (Poly(hexamethylenadipamid-co-caprolactam), Nylon^{®} 6/66 , Fa. DuPont), Polyamid 7 (Poly-7-aminoheptansäure, Nylon^{®} 7, Fa. DuPont), Polyamid 7,7 (Polyheptamethylenpimelamid, Nylon^{®} 7,7, Fa. DuPont), Polyamid 8 (Poly-8-aminooctansäure, Nylon^{®} 8, Fa. DuPont), Polyamid 8,8 (Polyoctamethylensuberamid, Nylon^{®} 8,8, Fa. DuPont), Polyamid 9 (Poly-9-aminononansäure, Nylon^{®} 9, Fa. DuPont), Polyamid 9,9 (Polynonamethylenazelamid, Nylon^{®} 9,9, Fa. DuPont), Polyamid 10 (Poly-10-amino-decansäure, Nylon^{®} 10, Fa. DuPont), Polyamid 10,9 (Poly(decamethylenazelamid), Nylon^{®} 10,9, Fa. DuPont), Polyamid 10,10 (Polydecamethylensebacamid, Nylon^{®} 10,10, Fa. DuPont), Polyamid 11 (Poly-11-aminoundecansäure, Nylon^{®} 11, Fa. DuPont), Polyamid 12 (Polylauryllactam, Nylon^{®} 12, Fa. DuPont, Grillamid^{®} L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid, Polyhexamethylenterephthalamid) und gegebenenfalls einem Elastomer als Modifikator, z. B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Ferner mit EPDM (Ethylen-Propylen-Dien-Kautschuk) oder ABS (Acrylnitril-Butadien-Styrol) modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate sowie um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern wie z. B. Anhydriden oder Aminen mit oder ohne Beschleunigern vernetzt werden.

Bevorzugt handelt es sich bei den Polymeren um Mischungen (Polyblends) der vorgenannten Polymeren, wie z. B. PP/EPDM (Polypropylen/ Ethylen-Propylen-Dien-Kautschuk), Polyamid/EPDM oder ABS (Polyamid/Ethylen-Propylen-DienKautschuk oder Acrylnitril-Butadien-Styrol), PVC/EVA (Polyvinylchlorid/ Ethylenvinylacetat), PVC/ABS (Polyvinylchlorid/Acrylnitril-Butadien-Styrol), PVC/MBS (Polyvinylchlorid/ Methacrylat-Butadien-Styrol), PC/ABS (Polycarbonat/Acrylnitril-Butadien-Styrol), PBTP/ABS (Polybutylenterephthalat /Acrylnitril-Butadien-Styrol), PC/ASA (Polycarbonat/Acrylester-Styrol-Acrylnitril), PC/PBT (Polycarbonat/Polybutylen-terephthalat), PVC/CPE (Polyvinylchlorid/chloriertes Polyethylen), PVC/Acrylate (Polyvinylchlorid/Acrylate, POM/thermoplastisches PUR (Polyoxymethylen / thermoplastisches Polyurethan), PC/thermoplastisches PUR (Polycarbonat / thermoplastisches Polyurethan), POM/Acrylat (Polyoxymethylen/Acrylat), POM/MBS (Polyoxymethylen/ Methacrylat-Butadien-Styrol), PPO/HIPS (Polyphenylenoxid /High impact polystyrol), PPO/PA 6.6 (Polyphenylenoxid /Polyamid 6.6) und Copolymere, PA/HDPE (Polyamid /High Density Polyethylen), PA/PP (Polyamid / Polyethylen), PA/PPO (Polyamid / Polyphenylenoxid), PBT/PC/ABS (Polybutylenterephthalat / Polycarbonat / Acrylnitril-Butadien-Styrol) und/ oder PBT/PET/PC (Polybutylenterephthalat / Polyethylenterephthalat / Polycarbonat).

Zur Herstellung von Polymerformmassen einsetzbare Compoundieraggregate sind Einwellenextruder bzw. Einschneckenextruder z. B. der Fa. Berstorff GmbH, Hannover und oder der Fa. Leistritz, Nürnberg und Mehrzonenschnecken-Extruder mit Dreizonenschnecken und/oder Kurzkompressionsschnecken sowie Doppelschneckenextruder z. B. der Fa. Coperion Werner & Pfleiderer GmbH & Co.KG, Stuttgart (ZSK 25, ZSK30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg.

Einsetzbare Compoundieraggregate sind auch Ko-Kneter z. B. von Fa. Coperion Buss Compounding Systems, CH-Pratteln, z. B. MDK/E46-11D und/oder Laborkneter (MDK 46 der Firma Buss, Schweiz mit wirksamer Schneckenlängen L =11D).

Geeignete Compoundieraggregate sind auch Ring-Extruder, z. B. der Fa. 3+Extruder GmbH, Laufen, mit einem Ring von drei bis zwölf kleinen Schnecken, die um einem statischen Kern rotieren und/oder Planetwalzenextruder z. B. der Fa. Entex, Bochum und/oder Entgasungs-Extruder und/oder Kaskadenextruder und/oder Maillefer-Schecken.

Einsetzbar sind ebenfalls Compounder mit gegenläufiger Doppelschnecke z. B. Compex 37- bzw. -70-Typen der Fa. Krauss-Maffei Berstorff.

Erfindungsgemäße wirksame Schneckenlängen sind bei Einwellenextrudern bzw. Einschneckenextrudern 20 bis 40D, bei Mehrzonenschneckenextudern z. B. 25D mit Einzugzone (L=10D), Übergangszone (L=6D), Ausstoßzone (L=9D) und bei Doppelschneckenextrudern 8 bis 48D.

Herstellung, Verarbeitung und Prüfung von flammgeschützten Kunststoffformmassen und Kunststoff-Formkörpern

Die Flammschutzkomponenten wurden mit dem Polymergranulat und evtl. Additiven vermischt und auf einem Doppelschnecken-Extruder (Typ Leistritz LSM 30/34) bei Temperaturen von 230 bis 260 °C (PBT-GV) bzw. von 260 bis 280 °C (PA 66-GV) eingearbeitet. Der homogenisierte Polymerstrang wurde abgezogen, im Wasserbad gekühlt und anschließend granuliert.

Nach ausreichender Trocknung wurden die Formmassen auf einer Spritzgießmaschine (Typ Aarburg Allrounder) bei Massetemperaturen von 240 bis 270 °C (PBT-GV) bzw. von 260 bis 290 °C (PA 66-GV) zu Prüfkörpern verarbeitet.

An Prüfkörpern aus jeder Mischung wurden die Brandklasse UL 94 (Underwriter Laboratories) an Probekörpern der Dicke 1,5 mm bestimmt.

Nach UL 94 ergeben sich folgende Brandklassen:
V-0: Kein Nachbrennen länger als 10 sec, Summe der Nachbrennzeiten bei 10 Beflammungen nicht grösser als 50 sec, kein brennendes Abtropfen, kein vollständiges Abbrennen der Probe, kein Nachglühen der Proben länger als 30 sec nach Beflammungsende.
V-1: Kein Nachbrennen länger als 30 sec nach Beflammungsende, Summe der Nachbrennzeiten bei 10 Beflammungen nicht grösser als 250 sec, kein Nachglühen der Proben länger als 60 sec nach Beflammungsende, übrige Kriterien wie bei V-0.
V-2: Zündung der Watte durch brennendes Abtropfen, übrige Kriterien wie bei V-1.
Nicht klassifizierbar (nkl): Erfüllt nicht die Brandklasse V-2.

Die Zusammensetzung der Aluminium-Hydrogenphosphite (Summenformel) lässt sich aus den P- und Al-Analysendaten berechnen. Unter Bildung der Summe der Kationenladungen und der Anionenladungen ist dies möglich, wenn die Anionenladungen auf zweiwertige Phosphitionen und einwertige Hydrogenphosphitionen verteilt werden.

Die Zusammensetzung einer Mischung von Aluminiumsalz und Aluminium-Hydrogenphosphit ist bestimmbar, indem z. B. Aluminiumhydroxid via Röntgenpulverdiffraktometrie (Peak bei ca. 18,3 Grad 2 Theta) bestimmt und der Rest an Phosphor und Aluminium in der Probe als Aluminium-Hydrogenphosphit definiert wird. Letzteres begründet sich in sehr geringen Gehalten an nicht umgesetzter phosphoriger Säure.

### Bestimmung der nicht umgesetzten phosphorigen Säure

Zu Bestimmung der nicht umgesetzten phosphorigen Säure wird das erhaltene Produkt als 10 %ige wässrige Suspension 24 h bei 100 °C am Rückfluss gekocht, danach filtriert und der P-gehalt bestimmt und daraus der H₃PO₃-Gehalt in der Probe berechnet.

### Test der thermischen Stabilität und Phosphinbildung

Ein wichtiges Kriterium für die thermische Stabilität der erfindungsgemäßen Aluminium-Hydrogenphosphite ist die Temperatur bei der Zersetzung eintritt und giftig PH₃ gebildet wird. Dessen Freisetzung muss bei der Herstellung von flammgeschützten Polymeren vermieden werden. Zur Bestimmung wird eine Materialprobe in einem Röhrenofen unter strömendem Stickstoff (30 l/g) erhitzt, indem die Temperatur stufenweise angehoben wird. Die Zersetzungstemperatur ist erreicht, wenn mit einem Nachweisröhrchen der Fa. Dräger mehr als 1 ppm PH₃ (Kurzzeitröhren auf Phosphorwasserstoff) nachgewiesen werden kann.

Die Erfindung wird durch die nachstehenden Beispiele erläutert. Ansatzmengen, Bedingungen und Analysen sind in der Tabelle aufgeführt.

### Beispiel 1

1787,2 g (22,82 mol) Aluminiumhydroxid (Hydral^{®} 710; Fa. ALCOA; 99,6 %ig) werden in einem Kneter vorgelegt. Unter Mischen werden portionsweise 2864 g (34,23 mol) phosphorige Säure (98 %ig) dazugegeben. Spontan tritt eine Reaktion unter Wärmeentwicklung ein. Man lässt weitere 2,5 h bei 150 °C reagieren. Das Produkt enthält Aluminiumhydrogenphosphit der Zusammensetzung Al₂(HPO₃)_{2,89} (H₂PO₃)_{0,22}, und 0,25 % unumgesetzte phosphorige Säure. Die Ausbeute ist 98,6 %.

### Beispiel 2

Wie in Beispiel 1 werden Aluminiumhydroxid und phosphorige Säure umgesetzt. Das Produkt enthält Aluminiumhydrogenphosphit der Zusammensetzung Al₂(HPO₃)₂ (H₂PO₃)₂, und 0,45 % phosphorige Säure. Die Ausbeute ist 90,3 %.

### Beispiel 3

Wie in Beispiel 1 werden Aluminiumhydroxid und phosphorige Säure umgesetzt. Das Produkt enthält Aluminiumhydrogenphosphit der Zusammensetzung Al₂(HPO₃)_{2,97} (H₂PO₃)_{0,06}, und 0,05 % phosphorigen Säure. Die Ausbeute ist 99,6 %.

### Beispiel 4 (Vergleich)

Nicht erfindungsgemäßes, käufliches Aluminiumphosphit zeigt im Vergleich eine geringere thermische Stabilität (PH₃-Bildung ab 320 °C).

**Tabelle: Ansatzmengen, Bedingungen und Analysenergebnisse**

| Beispiel | Rohstoffe | | Reaktionsbedingungen | | Produktanalysen, -tests | | | |
|---|---|---|---|---|---|---|---|---|
| | ATH | H₃PO₃ | Temperatur | Zeit | PH₃-Bildungs-temperatur | lösliches H₃PO₃ | Phosphit | Zusammensetzung |
| | [mol] | [mol] | [°C] | [h] | [°C] | [%] | [%] | |
| 1 | 22,82 | 34,23 | 150 | 2,5 | 340 | 0,25 | 98,6 | Al₂(HPO₃)_{2,89}(H₂PO₃)_{2,00} |
| 2 | 22,82 | 34,23 | 120 | 2,5 | 340 | 0,45 | 90,3 | Al₂(HPO₃)_{2,00}(H₂PO₃)_{2,00} |
| 3 | 22,82 | 34,23 | 150 | 5,0 | 340 | 0,05 | 99,6 | Al₂(HPO₃)_{2,97}(H₂PO₃)_{0,06} |
| 4 | - | - | - | - | 320 | - | 100,0 | Al₂(HPO₃)_{3,00} |

### Flammgeschützte Polymerformmassen und Polymerformkörper

Mit 50 Gew.-% Polyamid 66-Polymer, 30 Gew.-% Glasfasern, 3,6 Gew.-% Mischung von Aluminiumsalz und Aluminium-Hydrogenphosphit nach Beispiel 3 und 16,4 Gew.-% Aluminiumdiethylphosphinat Exolit^{®} OP1230 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

Mit 50 Gew.-% Polybutylenterephthalat-Polymer, 30 Gew.-% Glasfasern, 3,6 Gew.-% Mischung von Aluminiumsalz und Aluminium-Hydrogenphosphit nach Beispiel 3 und 16,4 Gew.-% Aluminiumdiethylphosphinat Exolit^{®} OP1240 (Fa. Clariant) werden nach den genannten allgemeinen Vorschriften flammgeschützte Polymerformmassen und flammgeschützte Polymerformkörper in Form von UL-94-Probestäben hergestellt. Der UL-94-Test ergibt V-0-Klassifizierung.

## Patentansprüche

1. Aluminium-Hydrogenphosphite der Formel (I)
Al_{2,00}(HPO₃)ᵥ(H₂PO₃)_{y} x (H₂O)_{z} (I)
in der
| | |
|---|---|
| v | 2 bis 2,99, |
| y | 2 bis 0,01 und |
| z | 0 bis 4 bedeutet. |

2. Aluminium-Hydrogenphosphite nach Anspruch 1, **dadurch gekennzeichnet, dass**
| | |
|---|---|
| v | 2,56 bis 2,99 |
| y | 0,9 bis 0,02 und |
| z | 0 bis 1 bedeutet |

3. Aluminium-Hydrogenphosphite nach Anspruch 1 oder 2, **dadurch gekennzeichnet, dass**
| | |
|---|---|
| v | 2,834 bis 2,99, |
| y | 0,332 bis 0,03 und |
| z | 0,01 bis 0,1 bedeutet |

4. Aluminium-Hydrogenphosphite nach einem oder mehreren der Ansprüche 1 bis 3, **dadurch gekennzeichnet, dass** sie
eine Teilchengröße von 0,1 bis 1000 µm,
eine Löslichkeit in Wasser von 0,01 bis 10 g/l,
eine Schüttdichte von 80 bis 800 g/l und
eine Restfeuchte von 0,1 bis 5 %
aufweisen.

5. Verfahren zur Herstellung von Aluminium-Hydrogenphosphiten nach einem oder mehreren der Ansprüche 1 bis 4, **dadurch gekennzeichnet, dass** man im Verhältnis 2,5 bis 3,5 mol eine Phosphorquelle mit 2 mol einer Aluminiumquelle ohne Verwendung eines Lösungsmittels bei 50 bis 300 °C zur Reaktion bringt.

6. Verfahren nach Anspruch 5, **dadurch gekennzeichnet, dass** die Reaktion bei 120 bis 220 °C ausgeführt wird.

7. Verfahren nach Anspruch 5 oder 6, **dadurch gekennzeichnet, dass** es sich bei den Aluminiumquellen um Aluminiummetall, Aluminiumlegierungen, Oxide, Hydroxide, Peroxide, Peroxidhydrate, Carbonate, Percarbonate, gemischte Carbonate/Hydrate, Formiate, Acetate, Propionate, Stearate, Lactate, Ascorbate, Oxalate oder um Aluminiumsalze mit Anionen von Säuren, die einen höheren Dampfdruck haben als phosphorige Säure, handelt.

8. Verfahren nach einem oder mehreren der Ansprüche 5 bis 7, **dadurch gekennzeichnet, dass** es sich bei den Phosphitquellen um phosphorige Säure, Phosphortrioxid, Phosphortrichlorid, elementarem Phosphor und/oder hypophosphoriger Säure handelt.

9. Verwendung von Aluminium-Hydrogenphosphiten nach einem oder mehreren der Ansprüche 1 bis 4 als Zwischenprodukt für weitere Synthesen, als Binder, als Vernetzer bzw. Beschleuniger beim Aushärten von Epoxidarzen, Polyurethanen und ungesättigten Polyesterharzen, als Polymerstabilisatoren, als Pflanzenschutzmittel, als Sequestrierungsmittel, als Mineralöl-Additiv, als Korrosionsschutzmittel, in Wasch- und Reinigungsmittelanwendungen, in Elektronikanwendungen.

10. Verwendung von Aluminium-Hydrogenphosphiten nach einem oder mehreren der Ansprüche 1 bis 4 als Flammschutzmittel, insbesondere Flammschutzmittel für Klarlacke und Intumeszenzbeschichtungen, Flammschutzmittel für Holz und andere cellulosehaltige Produkte, als reaktives und/oder nicht reaktives Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung sowie als Synergist und als Synergist in Flammschutzmittel-Mischungen und Flammschutzmitteln.

11. Flammgeschützte thermoplastische oder duroplastische Polymerformmasse, Polymer-Formkörper, -Filme, -Fäden und -Fasern enthaltend 0,1 bis 45 Gew.-% Aluminium-Hydrogenphosphite nach einem oder mehreren der Ansprüche 1 bis 4, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

12. Flammgeschützte thermoplastische oder duroplastische Polymerformmasse, Polymer-Formkörper, -Filme, -Fäden und -Fasern enthaltend 0,1 bis 45 Gew.-% einer Flammschutzmittel-Mischung, welche 0,1 bis 50 Gew.-% Aluminium-Hydrogenphosphite nach einem oder mehreren der Ansprüche 1 bis 4 und 50 bis 99,9 Gew.-% Flammschutzmittel enthält, 55 bis 99,9 Gew.-% thermoplastisches oder duroplastisches Polymer oder Mischungen derselben, 0 bis 55 Gew.-% Additive und 0 bis 55 Gew.-% Füllstoff bzw. Verstärkungsmaterialien, wobei die Summe der Komponenten 100 Gew.-% beträgt.

13. Flammgeschützte thermoplastische oder duroplastische Polymerformmasse, Polymer-Formkörper, -Filme, -Fäden und/oder -Fasern nach einem oder mehreren der Ansprüche 10 bis 12, **dadurch gekennzeichnet, dass** es sich bei dem Flammschutzmittel um Dialkylphosphinsäuren und/oder deren Salze; um Kondensationsprodukte des Melamins und/oder Umsetzungsprodukte des Melamins mit Phosphorsäure und/oder um Umsetzungsprodukte von Kondensationsprodukten des Melamins mit Polyphosphorsäure oder Gemischen davon; um stickstoffhaltige Phosphate der Formeln (NH₄)_{y} H₃-_{y} PO₄ bzw.
(NH₄ PO₃)_{z}, mit y gleich 1 bis 3 und z gleich 1 bis 10.000; um Benzoguanamin, Tris(hydroxyethyl)isocyanurat, Allantoin, Glycouril, Melamin, Melamincyanurat, Dicyandiamid und/oder Guanidin; um Magnesiumoxid, Calciumoxid, Aluminiumoxid, Zinkoxid, Manganoxid, Zinnoxid, Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zink-Silikat und/oder Zinkstannat handelt.

14. Flammgeschützte thermoplastische oder duroplastische Polymerformmasse, Polymer-Formkörper, -Filme, -Fäden und/oder -Fasern nach einem oder mehreren der Ansprüche 10 bis 12, **dadurch gekennzeichnet, dass** es sich bei dem Flammschutzmittel um Melam, Melem, Melon, Dimelaminpyrophosphat, Melaminpolyphosphat, Melampolyphosphat, Melonpolyphosphat und/oder Melempolyphosphat und/oder gemischte Polysalze davon und/oder um Ammoniumhydrogenphosphat, Ammoniumdihydrogenphosphat und/oder Ammoniumpolyphosphat handelt.

15. Flammgeschützte thermoplastische oder duroplastische Polymerformmasse, Polymer-Formkörper, -Filme, -Fäden und/oder -Fasern nach einem oder mehreren der Ansprüche 10 bis 12, **dadurch gekennzeichnet, dass** es sich bei dem Flammschutzmittel um Aluminiumhypophosphit, Zinkhypophosphit, Calciumhypophosphit, Natriumphosphit, Monophenylphopshinsäure und deren Salze, Mischungen von Dialkylphosphinsäuren und deren Salze mit Monoalkylphosphinsäuren und deren Salze, 2-Carboxyethyl-alkylphosphinsäure und deren Salze, 2-Carboxyethyl-methylphosphinsäure und deren Salze, 2-Carboxyethyl-arylphosphinsäure und deren Salze, 2-Carboxyethylphenylphosphinsäure und deren Salze, Oxa-10-phosphaphenanthrene (DOPO) und dessen Salze und Addukte an para-Benzochinon bzw Itaconsäure und deren Salze handelt.

## Claims

1. An aluminum hydrogenphosphite of the formula (I)
Al_{2.00}(HPO₃)ᵥ(H₂PO₃)_{y} x (H₂O)_{z} (I)
in which
| | |
|---|---|
| v | is 2 to 2.99, |
| y | is 2 to 0.01 and |
| z | is 0 to 4. |

2. An aluminum hydrogenphosphite as claimed in claim 1, wherein
| | |
|---|---|
| v | is 2.56 to 2.99, |
| y | is 0.9 to 0.02 and |
| z | is 0 to 1. |

3. An aluminum hydrogenphosphite as claimed in claim 1 or 2, wherein
| | |
|---|---|
| v | is 2.834 to 2.99, |
| y | is 0.332 to 0.03 and |
| z | is 0.01 to 0.1. |

4. An aluminum hydrogenphosphite as claimed in one or more of claims 1 to 3, which has
a particle size of 0.1 to 1000 µm,
a solubility in water of 0.01 to 10 g/l,
a bulk density of 80 to 800 g/l and
a residual moisture content of 0.1 to 5%.

5. A process for preparing aluminum hydrogenphosphites as claimed in one or more of claims 1 to 4, which comprises reacting, in a ratio of 2.5 to 3.5 mol, a phosphorus source with 2 mol of an aluminum source at 50 to 300°C without using a solvent.

6. The process as claimed in claim 5, wherein the reaction is executed at 120 to 220°C.

7. The process as claimed in claim 5 or 6, wherein the aluminum sources are aluminum metal, aluminum alloys, oxides, hydroxides, peroxides, peroxide hydrates, carbonates, percarbonates, mixed carbonates/hydrates, formates, acetates, propionates, stearates, lactates, ascorbates, oxalates, or aluminum salts with anions of acids having a higher vapor pressure than phosphorous acid.

8. The process as claimed in one or more of claims 5 to 7, wherein the phosphite sources are phosphorous acid, phosphorus trioxide, phosphorus trichloride, elemental phosphorus and/or hypophosphorous acid.

9. The use of aluminum hydrogenphosphites as claimed in one or more of claims 1 to 4 as an intermediate for further syntheses, as a binder, as a crosslinker or accelerator in the curing of epoxy resins, polyurethanes, unsaturated polyester resins, as polymer stabilizers, as crop protection compositions, as sequestrants, as a mineral oil additive, as an anticorrosive, in washing and cleaning composition applications, in electronics applications.

10. The use of aluminum hydrogenphosphites as claimed in one or more of claims 1 to 4 as a flame retardant, especially flame retardant for clearcoats and intumescent coatings, flame retardant for wood and other cellulosic products, as a reactive and/or nonreactive flame retardant for polymers, for production of flame-retardant polymer molding compositions, for production of flame-retardant polymer moldings and/or for rendering polyester and pure and blended cellulose fabrics flame-retardant by impregnation, and as a synergist and as a synergist in flame-retardant mixtures and flame retardants.

11. A flame-retardant thermoplastic or thermoset polymer molding composition or polymer molding, film, filament or fiber comprising 0.1 to 45% by weight of aluminum hydrogenphosphites as claimed in one or more of claims 1 to 4, 55 to 99.9% by weight of thermoplastic or thermoset polymer or mixtures thereof, 0 to 55% by weight of additives and 0 to 55% by weight of filler or reinforcing materials, where the sum of the components is 100% by weight.

12. A flame-retardant thermoplastic or thermoset polymer molding composition or polymer molding, film, filament or fiber comprising 0.1 to 45% by weight of a flame retardant mixture comprising 0.1 to 50% by weight of aluminum hydrogenphosphites as claimed in one or more of claims 1 to 4 and 50 to 99.9% by weight of flame retardant, 55 to 99.9% by weight of thermoplastic or thermoset polymer or mixtures thereof, 0 to 55% by weight of additives and 0 to 55% by weight of filler or reinforcing materials, where the sum of the components is 100% by weight.

13. The flame-retardant thermoplastic or thermoset polymer molding composition or polymer molding, film, filament or fiber as claimed in one or more of claims 10 to 12, wherein the flame retardant comprises dialkylphosphinic acids and/or salts thereof; condensation products of melamine and/or reaction products of melamine with phosphoric acid and/or reaction products of condensation products of melamine with polyphosphoric acid or mixtures thereof; nitrogen-containing phosphates of the formulae (NH₄)_{y} H₃-_{y} PO₄ and (NH₄ PO₃)_{z}, where y is 1 to 3 and z is 1 to 10 000; benzoguanamine, tris(hydroxyethyl) isocyanurate, allantoin, glycoluril, melamine, melamine cyanurate, dicyandiamide and/or guanidine; magnesium oxide, calcium oxide, aluminum oxide, zinc oxide, manganese oxide, tin oxide, aluminum hydroxide, boehmite, dihydrotalcite, hydrocalumite, magnesium hydroxide, calcium hydroxide, zinc hydroxide, tin oxide hydrate, manganese hydroxide, zinc borate, basic zinc silicate and/or zinc stannate.

14. The flame-retardant thermoplastic or thermoset polymer molding composition or polymer molding, film, filament or fiber as claimed in one or more of claims 10 to 12, wherein the flame retardant comprises melam, melem, melon, dimelamine pyrophosphate, melamine polyphosphate, melam polyphosphate, melon polyphosphate and/or melem polyphosphate and/or mixed poly salts thereof and/or ammonium hydrogenphosphate, ammonium dihydrogenphosphate and/or ammonium polyphosphate.

15. The flame-retardant thermoplastic or thermoset polymer molding composition or polymer molding, film, filament or fiber as claimed in one or more of claims 10 to 12, wherein the flame retardant comprises aluminum hypophosphite, zinc hypophosphite, calcium hypophosphite, sodium phosphite, monophenylphosphinic acid and salts thereof, mixtures of dialkylphosphinic acids and salts thereof and monoalkylphosphinic acids and salts thereof, 2-carboxyethylalkylphosphinic acid and salts thereof, 2-carboxyethylmethylphosphinic acid and salts thereof, 2-carboxyethylarylphosphinic acid and salts thereof, 2-carboxyethylphenylphosphinic acid and salts thereof, oxa-10-phosphaphenanthrene (DOPO) and salts thereof and adducts onto para-benzoquinone, or itaconic acid and salts thereof.

## Revendications

1. Hydrogénophosphites d'aluminium de formule (I)
Al_{2,00}(HPO₃)ᵥ(H₂PO₃)_{y} x (H₂O)_{z} (I)
dans laquelle
| | |
|---|---|
| v | signifie 2 à 2,99, |
| y | signifie 2 à 0,01 et |
| z | signifie 0 à 4. |

2. Hydrogénophosphites d'aluminium selon la revendication 1, **caractérisés en ce que**
| | |
|---|---|
| v | signifie 2,56 à 2,99 |
| y | signifie 0,9 à 0,02 et |
| z | signifie 0 à 1. |

3. Hydrogénophosphites d'aluminium selon la revendication 1 ou 2, **caractérisés en ce que**
| | |
|---|---|
| v | signifie 2,834 à 2,99, |
| y | signifie 0,332 à 0,03 et |
| z | signifie 0,01 à 0,1. |

4. Hydrogénophosphites d'aluminium selon l'une ou plusieurs des revendications 1 à 3, **caractérisés en ce qu'**ils présentent
une grosseur de particule de 0,1 à 1000 µm,
une solubilité dans l'eau de 0,01 g/l à 10 g/l,
une densité apparente de 80 à 800 g/l et
une humidité résiduelle de 0,1 à 5%.

5. Procédé pour la préparation d'hydrogénophosphites d'aluminium selon l'une ou plusieurs des revendications 1 à 4, **caractérisé en ce qu'**on fait réagir dans un rapport de 2,5 à 3,5 moles d'une source de phosphore avec 2 moles d'une source d'aluminium, sans utiliser de solvant, à 50 jusqu'à 300°C.

6. Procédé selon la revendication 5, **caractérisé en ce que** la réaction est réalisée à 120 jusqu'à 220°C.

7. Procédé selon la revendication 5 ou 6, **caractérisé en ce qu'**il s'agit, pour les sources d'aluminium, d'aluminium métallique, d'alliages d'aluminium, d'oxydes, d'hydroxydes, de peroxydes, de peroxydes hydratés, de carbonates, de percarbonates, de carbonates/hydrates mixtes, de formiates, d'acétates, de propionates, de stéarates, de lactates, d'ascorbates, d'oxalates ou de sels d'aluminium avec des anions d'acides, qui présentent une tension de vapeur supérieure à celle de l'acide phosphoreux.

8. Procédé selon l'une ou plusieurs des revendications 5 à 7, **caractérisé en ce qu'**il s'agit, pour les sources de phosphite, d'acide phosphoreux, de trioxyde de phosphore, de trichlorure de phosphore, de phosphore élémentaire et/ou d'acide hypophosphoreux.

9. Utilisation d'hydrogénophosphites d'aluminium selon l'une ou plusieurs des revendications 1 à 4 comme produit intermédiaire pour d'autres synthèses, comme liant, comme réticulant ou, selon le cas, accélérateur lors du durcissement de résines époxydes, de polyuréthanes et de résines de polyester insaturées, comme stabilisants de polymères, comme agents de phytoprotection, comme agents de séquestration, comme additif d'huile minérale, comme agent de protection contre la corrosion, dans des utilisations d'agents de lavage et de nettoyage et dans des applications électroniques.

10. Utilisation d'hydrogénophosphites d'aluminium selon l'une ou plusieurs des revendications 1 à 4 comme agent ignifuge, en particulier comme agent ignifuge pour des laques claires et des revêtements intumescents, comme agent ignifuge pour bois et d'autres produits contenant de la cellulose, comme agent ignifuge réactif et/ou non réactif pour des polymères, pour la préparation de masses de moulage polymères ignifugées, pour la préparation de corps façonnés polymères ignifugés et/ou pour l'apprêt inhibant les flammes de polyesters et de tissus en cellulose pure et de tissus mixtes à base de cellulose par imprégnation ainsi que comme synergiste et comme synergiste dans des mélanges d'agents ignifuges et dans des agents ignifuges.

11. Masse de moulage polymère, corps façonnés, films, fils et/ou fibres polymères thermoplastiques ou thermodurcissables, ignifugés, contenant 0,1 à 45% en poids d'hydrogénophosphites d'aluminium selon l'une ou plusieurs des revendications 1 à 4, 55 à 99,9% en poids de polymère thermoplastique ou thermodurcissable ou de mélanges de ceux-ci, 0 à 55% en poids d'additifs et 0 à 55% en poids de charge ou de matériaux de renforcement, la somme des composants valant 100% en poids.

12. Masse de moulage polymère, corps façonnés, films, fils et/ou fibres polymères thermoplastiques ou thermodurcissables, ignifugés, contenant 0,1 à 45% en poids d'un mélange d'agents ignifuges, qui contient 0,1 à 50% en poids d'hydrogénophosphites d'aluminium selon l'une ou plusieurs des revendications 1 à 4 et 50 à 99,9% en poids d'agent ignifuge, 55 à 99,9% en poids de polymère thermoplastique ou thermodurcissable ou de mélanges de ceux-ci, 0 à 55% en poids d'additifs et 0 à 55% en poids de charge ou de matériaux de renforcement, la somme des composants valant 100% en poids.

13. Masse de moulage polymère, corps façonnés, films, fils et/ou fibres polymères thermoplastiques ou thermodurcissables, ignifugés selon l'une ou plusieurs des revendications 10 à 12, **caractérisés en ce qu'**il s'agit, pour l'agent ignifuge, d'acides dialkylphosphiniques et/ou de leurs sels ; de produits de condensation de la mélamine et/ou de produits de transformation de la mélamine avec de l'acide phosphorique et/ou de produits de transformation de produits de condensation de la mélamine avec du poly(acide phosphorique) ou de mélanges de ceux-ci ; de phosphates contenant de l'azote des formules (NH₄)_{y}H_{3-y}PO₄ ou (NH₄PO₃)_{z}, y valant 1 à 3 et z valant 1 à 10.000 ; de benzoguanamine, d'isocyanurate de tris(hydroxyéthyle), d'allantoïne, de glyco-urile, de mélamine, de cyanurate de mélamine, de dicyanodiamide et/ou de guanidine ; d'oxyde de magnésium, d'oxyde de calcium, d'oxyde d'aluminium, d'oxyde de zinc, d'oxyde de manganèse, d'oxyde d'étain, d'hydroxyde d'aluminium, de boehmite, de dihydrotalcite, d'hydrocalumite, d'hydroxyde de magnésium, d'hydroxyde de calcium, d'hydroxyde de zinc, d'oxyde d'étain hydraté, d'hydroxyde de manganèse, de borate de zinc, de silicate de zinc basique et/ou de stannate de zinc.

14. Masse de moulage polymère, corps façonnés, films, fils et/ou fibres polymères thermoplastiques ou thermodurcissables, ignifugés selon l'une ou plusieurs des revendications 10 à 12, **caractérisés en ce qu'**il s'agit, pour l'agent ignifuge, de mélam, de mélem, de mélon, de pyrophosphate de dimélamine, de polyphosphate de mélamine, de polyphosphate de mélam, de polyphosphate de mélon et/ou de polyphosphate de mélem et/ou de polysels mixtes de ceux-ci et/ou d'hydrogénophosphate d'ammonium, de dihydrogénophosphate d'ammonium et/ou de polyphosphate d'ammonium.

15. Masse de moulage polymère, corps façonnés, films, fils et/ou fibres polymères thermoplastiques ou thermodurcissables, ignifugés selon l'une ou plusieurs des revendications 10 à 12, **caractérisés en ce qu'**il s'agit, pour l'agent ignifuge, d'hypophosphite d'aluminium, d'hypophosphite de zinc, d'hypophosphite de calcium, de phosphite de sodium, d'acide monophénylphosphinique et de ses sels, de mélanges d'acides dialkylphosphiniques et de leurs sels avec des acides monoalkylphosphiniques et leurs sels, d'acide 2-carboxyéthylalkylphosphinique et de ses sels, d'acide 2-carboxyéthylméthylphosphinique et de ses sels, d'acide 2-carboxyéthylarylphosphinique et de ses sels, d'acide 2-carboxyéthylphénylphosphinique et de ses sels, d'oxa-10-phosphaphénanthrène (DOPO) et de ses sels et de produits d'addition sur de la para-benzoquinone ou sur de l'acide itaconique et de leurs sels.
